# EUROPEAN PATENT APPLICATION

(11) **EP 4 474 925 A1**
(43) Date of publication of application: **11.12.2024**
(21) Application number: 24176408.3
(22) Date of filing: 16.05.2024
(51) Int. Cl.: G05B 13/04, G06Q 50/06

(54) **SYSTEM AND METHOD FOR ADAPTIVELY OPERATING A POWER GENERATING PLANT USING OPTIMAL SETPOINTS**

(30) Priority: 01.06.2023 US 202318327135
(71) Applicant: General Electric Renovables España S.L., 08005 Barcelona (ES)
(72) Inventor: Wheeler, Frederick Wilson, Niskayuna, 12309 (US); Draper, Samuel David, Greenville, 29607 (US); Kvaternik, Karla, Niskayuna, 12309 (US); Boggess, Grant Forrest, Greenville, 29617 (US); Mueller, Kolja Felix, 08005 Barcelona (ES)
(74) Representative: Zimmermann & Partner Patentanwälte mbB

(57) **Abstract**

A method for operating a power generating plant having one or more power generating assets includes receiving, via a plurality of independent applications of a supervisory controller, a plurality of operational parameters relating to the one or more power generating assets in the power generating plant. The method also includes generating, via the plurality of independent applications of the supervisory controller, a plurality of marginal effect maps based on the plurality of operational parameters. The method further includes receiving, via a central optimizer module, the plurality of marginal effect maps from the plurality of independent applications and determining one or more operational setpoints for the power generating asset(s) based on the marginal effect maps to optimize an economic value of operating the one or more power generating assets. Moreover, the method includes communicating the operational setpoint(s) to the power generating asset(s).

## Description

### FIELD

The present disclosure relates in general to power generating assets, and more particularly to systems and methods for adaptively operating a power generating plant having a plurality of power generating assets using optimal setpoints determined based on trade-offs between energy production, component damage, risk of component failure, and/or other factors.

### BACKGROUND

As disclosed herein, power generating assets may take a variety of forms and may include power generating assets which rely on renewable and/or nonrenewable sources of energy. Those power generating assets which rely on renewable sources of energy may generally be considered one of the cleanest, most environmentally friendly energy sources presently available. For example, wind turbines have gained increased attention in this regard. A modern wind turbine typically includes a tower, a generator, a gearbox, a nacelle, and one or more rotor blades. The nacelle includes a rotor assembly coupled to the gearbox and to the generator. The rotor assembly and the gearbox are mounted on a bedplate support frame located within the nacelle. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy and the electrical energy may be transmitted to a converter and/or a transformer housed within the tower and subsequently deployed to a utility grid. Modern wind power generation plants typically take the form of a wind farm having multiple wind turbine generators that are operable to supply power to a transmission system providing power to a power grid.

There are many control schemes utilized by power generating assets to improve turbine performance through supervisory control and modification of controller setpoints. However, such control schemes do not interact, and some have control goals that are not consistent with true economic value. For example, many known supervisory control approaches for asset performance are concerned with a narrow set of constraints and have inflexible monolithic implementations.

In view of the aforementioned, the art is continuously seeking new and improved systems and methods for adaptively operating a power generating plant having a plurality of power generating assets. Accordingly, the present disclosure is directed to systems and methods having a framework with a suite of independent applications to allow supervisory control for operation optimization to manage many trade-offs simultaneously. In particular, systems and methods of the present disclosure allow those trade-offs to be made with respect to economic value of operation (i.e., the system operates assets at setpoints that maximize their overall value, accounting for production, maintenance, and repair).

### BRIEF DESCRIPTION

Aspects and advantages of the invention will be set forth in part in the following description, or may be obvious from the description, or may be learned through practice of the invention.

In an aspect, the present disclosure is directed to a method for operating a power generating plant having one or more power generating assets. The method includes receiving, via a plurality of independent applications of a supervisory controller, a plurality of operational parameters relating to the one or more power generating assets in the power generating plant. Further, the method includes generating, via the plurality of independent applications of the supervisory controller, a plurality of marginal effect maps based on the plurality of operational parameters, each of the plurality of the marginal effect maps comprising a model of information relating operational setpoint selections of the one or more power generating assets to expected value or an effect on a component and failure mode. Moreover, the method includes receiving, via a central optimizer module of the supervisory controller, the plurality of marginal effect maps from the plurality of independent applications. In addition, the method includes determining, via the central optimizer module of the supervisory controller, one or more operational setpoints for the one or more power generating assets in the power generating plant based on the plurality of marginal effect maps to optimize an economic value of operating the one or more power generating assets. Further, the method includes communicating, via the central optimizer module of the supervisory controller, the one or more operational setpoints to the one or more power generating assets in the power generating plant.

In another aspect, the present disclosure is directed to a system for operating a power generating plant. The system includes one or more power generating assets and a supervisory controller communicatively coupled to local controllers of one or more power generating assets. The supervisory controller includes a plurality of independent applications and a central optimizer module. The plurality of independent applications and the central optimizer module are configured to perform a plurality of operations. The plurality of operations includes receiving, via the plurality of independent applications, a plurality of operational parameters relating to the one or more power generating assets in the power generating plant; generating, via the plurality of independent applications, a plurality of marginal effect maps based on the plurality of operational parameters, each of the plurality of the marginal effect maps comprising a model of information relating operational setpoint selections of the one or more power generating assets to expected value or an effect on a component and failure mode; receiving, via the central optimizer module, the plurality of marginal effect maps from the plurality of independent applications; determining, via the central optimizer module, one or more operational setpoints for the one or more power generating assets in the power generating plant based on the plurality of marginal effect maps to optimize an economic value of operating the one or more power generating assets; and communicating, via the central optimizer module of the supervisory controller, the one or more operational setpoints to the one or more power generating assets in the power generating plant.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a power generating asset configured as a wind turbine according to the present disclosure;
FIG. 2 illustrates a perspective, internal view of an embodiment of a nacelle of a wind turbine according to the present disclosure;
FIG. 3 illustrates a schematic diagram of an embodiment of a controller according to the present disclosure;
FIG. 4 illustrates a schematic diagram of an embodiment of a wind farm having a plurality of wind turbines according to the present disclosure;
FIG. 5 illustrates a schematic diagram of an embodiment of a system for operating a power generating plant having a plurality of power generating assets according to the present disclosure, particularly illustrating the system having a plurality of independent applications and a central optimizer module;
FIG. 6A illustrates a schematic diagram of an embodiment of example marginal effect maps generated by a plurality of independent applications of a system for operating a power generating plant according to the present disclosure;
FIG. 6B illustrates a schematic diagram of an embodiment of example cost definitions generated by a plurality of independent applications of a system for operating a power generating plant according to the present disclosure;
FIG. 7 illustrates a schematic diagram of an embodiment of a system for operating a power generating plant having a plurality of power generating assets according to the present disclosure;
FIG. 8 illustrates a schematic diagram of an embodiment of a cost model of a central optimizer of a system for operating a power generating plant having a plurality of power generating assets according to the present disclosure; and
FIG. 9A illustrates a schematic diagram of an embodiment of a fatigue life application of a system for operating a power generating plant according to the present disclosure;
FIG. 9B illustrates a schematic diagram of another embodiment of a fatigue life application of a system for operating a power generating plant according to the present disclosure;
FIG. 10A illustrates a schematic diagram of an embodiment of a wake steering for loads application of a system for operating a power generating plant according to the present disclosure;
FIG. 10B illustrates a schematic diagram of another embodiment of a wake steering for loads application of a system for operating a power generating plant according to the present disclosure;
FIG. 11 illustrates a schematic diagram of an embodiment of a risk assessment application of a system for operating a power generating plant according to the present disclosure; and
FIG. 12 illustrates a schematic diagram of an embodiment of a power demand prediction application and a peak hour prediction application of a system for operating a power generating plant according to the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to systems and methods for operating a power generating plant having a plurality of power generating assets. In an embodiment, the system has a framework for real-time supervisory control of the power generating assets, such as wind turbines, that adaptively optimizes tradeoffs between energy production, component damage, risk of component failure, and/or other factors. In an embodiment, systems of the present disclosure may include a plurality of independent computer applications that assess expected value and costs for different components of the wind turbines, with outputs of the independent applications being used as inputs to a central optimizer.

In particular embodiments, for example, the independent applications receive a plurality of operational parameters relating to the plurality of power generating assets and generate a plurality of marginal effect maps based on the plurality of operational parameters. In such embodiments, each of the marginal effect maps includes a model of information relating operational selections of each of the plurality of power generating assets to expected costs. Further, in an embodiment, the model(s) of the independent applications are responsible for characterizing how each setpoint option or selection will affect a component and failure mode. Moreover, in an embodiment, the central optimizer is configured to determine optimal operational setpoints for each of the power generating assets based on the marginal effect maps to optimize an economic value of operating the power generating assets. In certain embodiments, as an example, the independent applications and/or the central optimizer may utilize machine-learning, model-based analytics. The central optimizer then communicates the operational setpoints to each of the power generating assets every so often, such as between about one (1) minute and about ten (10) minutes.

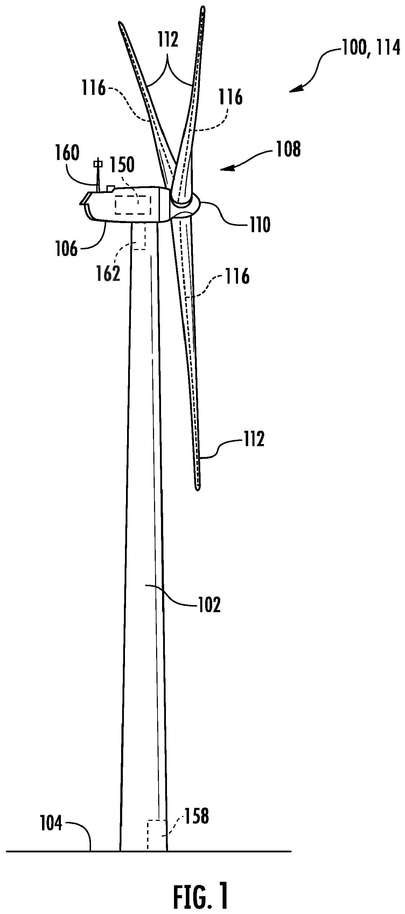

Referring now to the drawings, FIG. 1 illustrates a perspective view of an embodiment of a power generating asset 100 according to the present disclosure. As shown, the power generating asset 100 may be configured as a wind turbine 114. In an additional embodiment, the power generating asset 100 may, for example, be configured as a solar power generating asset, a hydroelectric asset, a fossil fuel generator, a hybrid power generating asset, and/or similar.

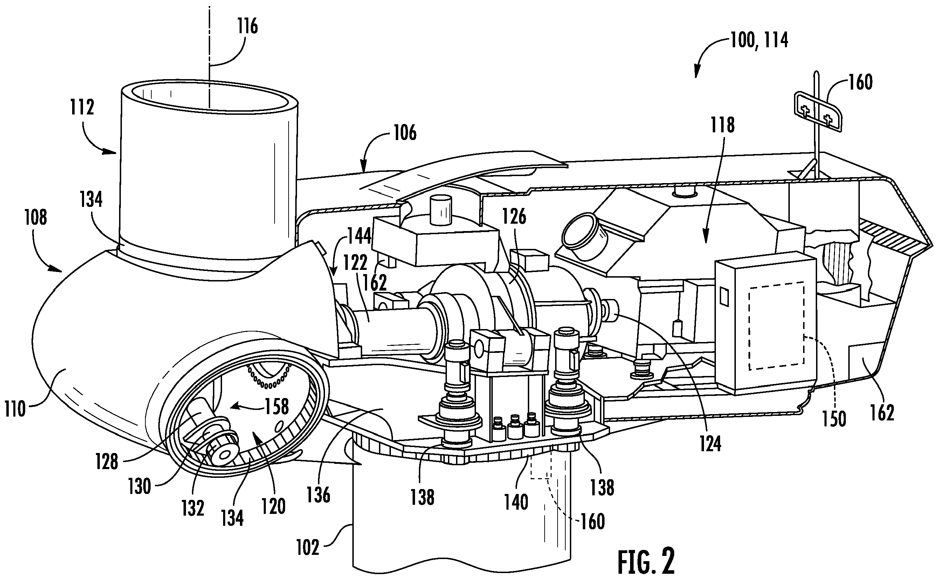

When configured as a wind turbine 114, the power generating asset 100 may generally include a tower 102 extending from a support surface 104, a nacelle 106, mounted on the tower 102, and a rotor 108 coupled to the nacelle 106. The rotor 108 may include a rotatable hub 110 and at least one rotor blade 112 coupled to, and extending outwardly from, the hub 110. For example, in the illustrated embodiment, the rotor 108 includes three rotor blades 112. However, in an additional embodiment, the rotor 108 may include more or less than three rotor blades 112. Each rotor blade 112 may be spaced about the hub 110 to facilitate rotating the rotor 108 to enable kinetic energy to be transferred from the wind into usable mechanical energy, and subsequently, electrical energy. For instance, the hub 110 may be rotatably coupled to an electric generator 118 (FIG. 2) positioned within the nacelle 106 to permit electrical energy to be produced.

The power generating asset 100 may also include a local controller 150, which may also be referred to herein as a "turbine controller" and/or a "real-time controller". In other words, the real-time controller is capable of stable operation of the power generating asset 100, meeting certain setpoints and operating on a real-time basis (e.g., within milliseconds). When configured as a wind turbine 114, the controller 150 may be configured as a turbine controller centralized within the nacelle 106. However, in other embodiments, the controller 150 may be located within any other component of the wind turbine 114 or at a location outside the wind turbine. Further, the controller 150 may be communicatively coupled to any number of the components of the power generating asset 100 in order to control the components. As such, the controller 150 may include a computer or other suitable processing unit. Thus, in several embodiments, the controller 150 may include suitable computer-readable instructions that, when implemented, configure the controller 150 to perform various different functions, such as receiving, transmitting and/or executing wind turbine control signals.

Referring now to FIG. 2, a simplified, internal view of one embodiment of the nacelle 106 of the wind turbine 114 shown in FIG. 1 is illustrated. As shown, the generator 118 may be coupled to the rotor 108 for producing electrical power from the rotational energy generated by the rotor 108. For example, as shown in the illustrated embodiment, the rotor 108 may include a rotor shaft 122 coupled to the hub 110 for rotation therewith. The rotor shaft 122 may be rotatably supported by a main bearing 144. The rotor shaft 122 may, in turn, be rotatably coupled to a high-speed shaft 124 of the generator 118 through a gearbox 126 connected to a bedplate support frame 136. As is generally understood, the rotor shaft 122 may provide a low-speed, high-torque input to the gearbox 126 in response to rotation of the rotor blades 112 and the hub 110. The gearbox 126 may then be configured to convert the low-speed, high-torque input to a high-speed, low-torque output to drive the high-speed shaft 124 and, thus, the generator 118.

Each rotor blade 112 may also include a pitch control mechanism 120 configured to rotate each rotor blade 112 about its pitch axis 116. Each pitch control mechanism 120 may include a pitch drive motor 128, a pitch drive gearbox 130, and a pitch drive pinion 132. In such embodiments, the pitch drive motor 128 may be coupled to the pitch drive gearbox 130 so that the pitch drive motor 128 imparts mechanical force to the pitch drive gearbox 130. Similarly, the pitch drive gearbox 130 may be coupled to the pitch drive pinion 132 for rotation therewith. The pitch drive pinion 132 may, in turn, be in rotational engagement with a pitch bearing 134 coupled between the hub 110 and a corresponding rotor blade 112 such that rotation of the pitch drive pinion 132 causes rotation of the pitch bearing 134. Thus, in such embodiments, rotation of the pitch drive motor 128 drives the pitch drive gearbox 130 and the pitch drive pinion 132, thereby rotating the pitch bearing 134 and the rotor blade(s) 112 about the pitch axis 116.

Similarly, the wind turbine 114 may include one or more yaw drive mechanisms 138 communicatively coupled to the controller 150, with each yaw drive mechanism(s) 138 being configured to change the angle of the nacelle 106 relative to the wind (e.g., by engaging a yaw bearing 140 of the wind turbine 114). It should be appreciated that the controller 150 may direct the yawing of the nacelle 106 and/or the pitching of the rotor blades 112 so as to aerodynamically orient the wind turbine 114 relative to a wind acting on the wind turbine 114, thereby facilitating power production.

In several embodiments, the power generating asset 100 may include at least one environmental sensor 160 for monitoring at least one environmental condition affecting the power generating asset 100. In an embodiment, the environmental sensor(s) 160 may, for example, be a wind vane, an anemometer, a Light Detection and Ranging (LIDAR) sensor, thermometer, barometer, or any other suitable sensor. Environmental data gathered by the environmental sensor(s) 160 may include measures of wind direction, wind speed, wind shear, wind gust, wind veer, atmospheric pressure, pressure gradient and/or temperature. Thus, the environmental data may define the conditions in which the power generating asset 100 is operating. In an embodiment, the environmental sensor(s) 160 may be mounted to the nacelle 106 at a location downwind of the rotor 108. It should be appreciated that the environmental sensor(s) 160 may include a network of sensors and may be positioned away from the power generating asset 100.

In addition, the power generating asset 100 may include one or more operational sensors 162. The operational sensor(s) 162 may be configured to detect an operational parameter and/or performance of the power generating asset 100. The operational sensor(s) 162 may be configured to monitor multiple parameters associated with the performance and/or health of a component of the power generating asset 100. For example, the operational sensor(s) 162 may monitor various operational parameters, such as environmental data, geographical data, forecasted data, seasonal data, historical data, loading data, power data (e.g., power consumption, power generation, etc.), one or more grid parameters (e.g., grid code requirements, grid strength, voltage, frequency, current, etc.), one or more sensor measurements, one or more electrical conditions (e.g., voltage, frequency, current, etc.), parameters associated with vibrations, audible signals, visual indications, angular positions, rotational velocities, bending moments or any other loading conditions, power consumption, power generation, temperature and/or other suitable parameters.

In an embodiment, the operational sensor(s) 162 may, for example, be a rotational speed sensor operably coupled to the controller 150. For example, the operational sensor(s) 162 may be directed at the rotor shaft 122 of the power generating asset 100, such as the wind turbine 114. The operational sensor(s) 162 may gather data indicative of the rotational speed and/or rotational position of the rotor shaft 122, and thus the rotor 108 in the form of a rotor speed and/or a rotor azimuth. The operational sensor(s) 162 may, in an embodiment, be an analog tachometer, a direct current (DC) tachometer, an alternating current (AC) tachometer, a digital tachometer, a contact tachometer a non-contact tachometer, or a time and frequency tachometer.

Still referring to FIG. 2, in an embodiment, the operational sensor(s) 162 may be configured to collect data indicative of a response of the component(s) of the power generating asset 100 to the environmental condition(s) or other load. For example, in an embodiment, the operational sensor(s) 162 may be configured as a strain gauge configured to detect a tensile load on the component, such as the rotor 108. In an additional embodiment, the operational sensor(s) 162 may include at least one of an accelerometer, a photo-optic sensor, an acoustic sensor, a transducer, a lidar system, a vibration sensor, a force sensor, a rate sensor, a piezo sensor, a position sensor, an inclinometer, and/or a torque sensor. In an embodiment, the operational sensor(s) 162 may, for example, be configured to collect sensor data indicative of at least one of a nacelle acceleration, a vibration of the tower 102, a bending of the rotor shaft 122, an acoustic signature of the power generating asset 100, an occlusion of an optical sensor due to a passage of the rotor blade 112, a rotor blade 112 discontinuity, a horizontal and vertical deflection of the rotor 108, and/or an acceleration of the rotor 108. In still further embodiments, such parameters may be measured and/or estimated using the real-time controller(s) described herein or a signal processor, observer, Kalman filter or other signal estimator.

It should also be appreciated that, as used herein, the term "monitor" and variations thereof indicates that the various sensors of the power generating asset 100 may be configured to provide a direct measurement of the parameters being monitored or an indirect measurement of such parameters. Thus, the sensors described herein may, for example, be used to generate signals relating to the parameter being monitored, which can then be utilized by the controller 150 to determine a condition or response of the power generating asset 100.

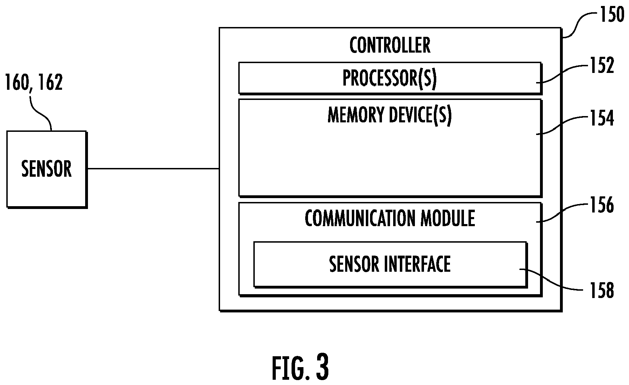

Referring now to FIG. 3, a schematic diagram of an embodiment of suitable components that may be included within the controller 150 is illustrated. For example, as shown, the controller 150 may include one or more processor(s) 152 and associated memory device(s) 154 configured to perform a variety of computer-implemented functions (e.g., performing the methods, steps, calculations and the like and storing relevant data as disclosed herein). Additionally, the controller 150 may also include a communications module 156 to facilitate communications between the controller 150 and the wind turbines 100, and components thereof. Further, the communications module 156 may include one or more sensor interfaces 158 (e.g., one or more analog-to-digital converters) to permit signals transmitted from one or more sensors, such as the environmental sensor(s) 160 and/or the operational sensor(s) 162 to be converted into signals that can be understood and processed by the processors 152. It should be appreciated that the sensors may be communicatively coupled to the communications module 156 using any suitable means. For example, as shown in FIG. 3, the sensors may be coupled to the sensor interface(s) 158 via a wired connection. However, in other embodiments, the sensors 160, 162 may be coupled to the sensor interface(s) 158 via a wireless connection, such as by using any suitable wireless communications protocol known in the art. Additionally, the communications module 156 may also be operably coupled to an operating state control module 214 configured to implement a control action.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 154 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 154 may generally be configured to store suitable computer-readable instructions that, when implemented by the processor(s) 152, configure the controller 150 to perform various functions including, but not limited to, determining the actual root cause of a performance anomaly based on a plurality of potential root causes of the performance anomaly and the plurality of corresponding probabilities as described herein, as well as various other suitable computer-implemented functions.

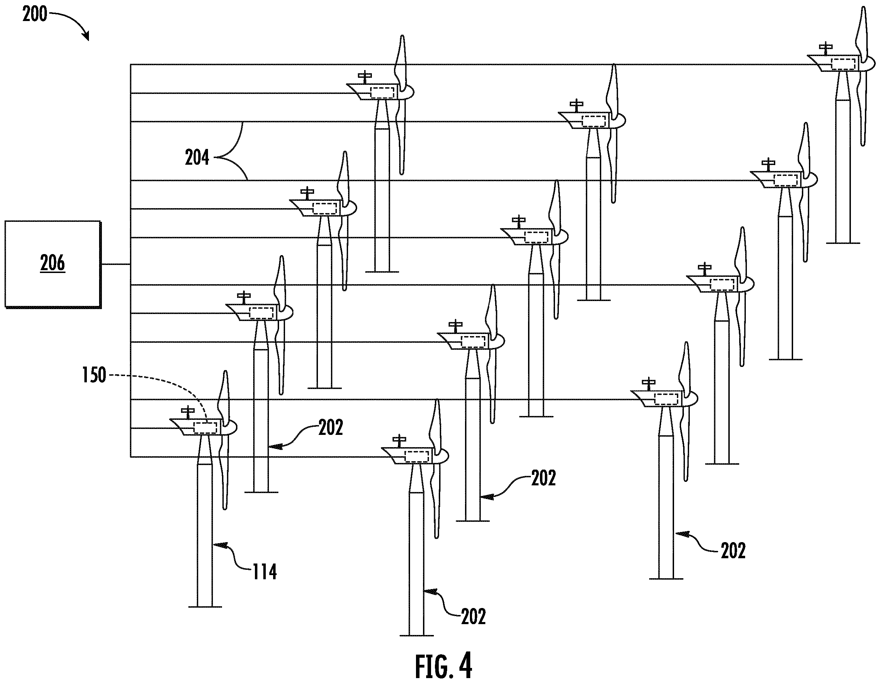

Referring now to FIG. 4, the wind turbine 114 described herein may be part of a wind farm 200. As shown, the wind farm 200 may include one or more of wind turbines 202, including the wind turbine 10 described above, and a supervisory controller 206 (also referred to herein as a farm-level controller). For example, as shown in the illustrated embodiment, the wind farm 200 includes twelve wind turbines, including wind turbine 114. However, in other embodiments, the wind farm 200 may include any other number of wind turbines, such as less than twelve wind turbines or greater than twelve wind turbines. In one embodiment, the turbine controllers (e.g., turbine controller 150) of the plurality of wind turbines 202 are communicatively coupled to the farm-level controller 206, e.g., through a wired connection, such as by connecting the turbine controller 150 through suitable communicative links 204 (e.g., a suitable cable). Alternatively, the turbine controllers may be communicatively coupled to the farm-level controller 206 through a wireless connection, such as by using any suitable wireless communications protocol known in the art. In further embodiments, the supervisory controller 206 is configured to send and receive control signals to and from the various wind turbines 202, such as for example, distributing real and/or reactive power demands and/or operational set points across the wind turbines 202 of the wind farm 200.

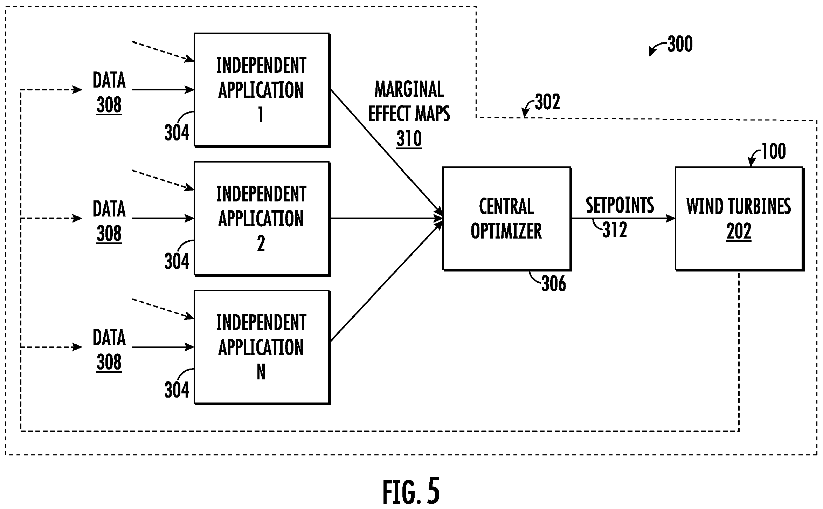

Referring now to FIGS. 5-12, various aspects of an embodiment of a system 300 for operating a power generating plant having a plurality of power generator assets 100 according to the present disclosure are presented. For example, as described herein, the system 300 may be utilized for operating the wind farm 200 having the wind turbines 202 described above. However, it should be appreciated that the disclosed system 300 may be used any other power generating asset 100 having any suitable configuration.

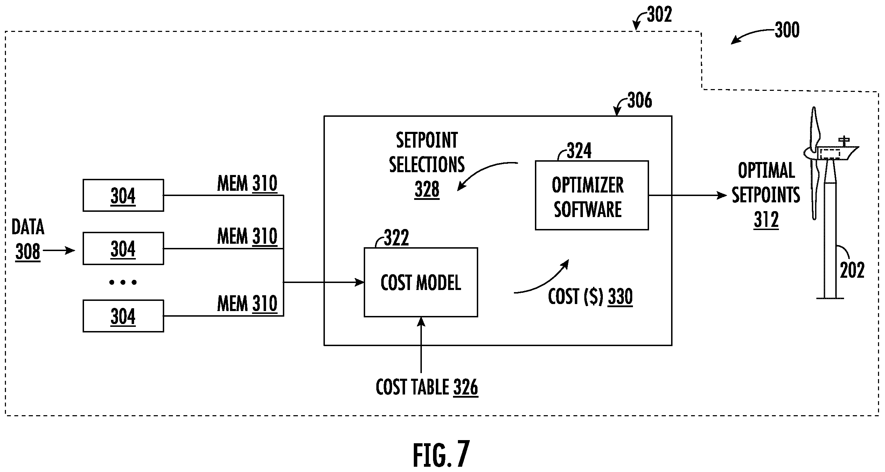

Referring particularly to FIGS. 5 and 7, in an embodiment, the system 300 may include a supervisory controller 302 (e.g., such as farm-level controller 206), a plurality of independent applications 304, and a central optimizer module 306. In particular embodiments, as shown, the illustrated embodiment of FIGS. 5 and 7 includes three independent applications 304 (e.g., labeled as Independent Application 1, Independent Application 2, and Independent Application N in FIG. 5). Thus, it should be understood that any suitable number of independent applications 304 can be utilized by the system 300. Thus, the system 300 can be easily modified to include more or less independent applications 304 as desired, including existing independent applications 304 as well as independent applications 304 developed in the future.

Further, as shown in FIGS. 5 and 7, the independent applications 304 may be configured to receive data 308, which may include various operational parameters, e.g., relating to the plurality of power generating assets 100 in the power generating plant. For example, in an embodiment, the operational parameters described herein may include, but are not limited to, environmental data (e.g., wind speed, wind direction, turbulence, temperature, air density, wind shear, wake, etc.), geographical data (e.g., terrain information, location, etc.), forecasted data, seasonal data (e.g., time of year, time of day, temperature, etc.), historical data, loading data, power data (e.g., power output, reactive power, active power, etc.), one or more grid parameters (e.g., voltage, current, frequency, grid strength, etc.), one or more sensor measurements, or one or more electrical conditions (e.g., voltage, current, frequency, etc.). In addition, in an embodiment, the operational parameters may include one or more parameters associated with the performance and/or health of a component of the power generating asset 100. Examples of the operational parameters described herein may include power output, tip speed ratio, a pitch setpoint, a yawing moment, and/or a bending moment.

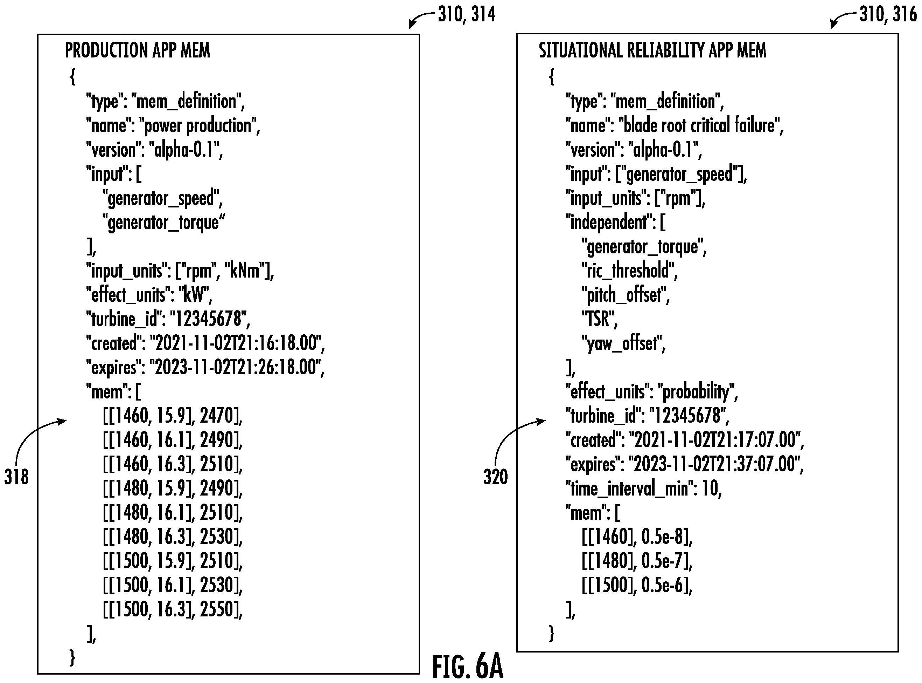

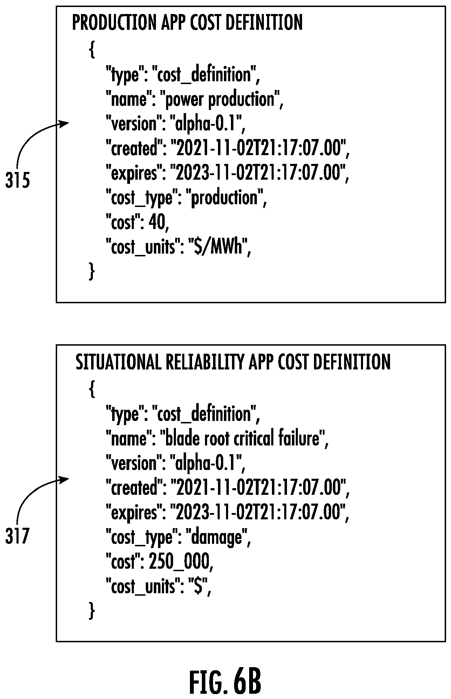

Accordingly, as shown in FIGS. 5 and 7, the independent applications 304 are configured to generate a plurality of marginal effect maps (MEMs) 310 based on the plurality of operational parameters. In such embodiments, for example, the marginal effect maps 310 may include a model of information relating operational selections of each of the plurality of power generating assets 100 to expected costs. Moreover, in an embodiment, the model(s) further characterize how the operational setpoint selections affect a component and failure mode. In certain embodiments, as an example, the component and the failure mode may include a risk of failure, damage, power production, compliance, etc. Moreover, as shown in FIG. 6A, example marginal effect maps 310 are illustrated. Furthermore, FIG. 6B illustrates a schematic diagram of an embodiment of example cost definitions 315, 317 generated by a plurality of independent applications of a system for operating a power generating plant according to the present disclosure. More specifically, as shown in FIG. 6A, a first example of a MEM is a production application MEM 314, whereas another example MEM is a situational reliability application MEM 316. Thus, as shown, the MEM 314 provides information 318 relating power production selections for a number of power generating assets to expected costs. Further, as shown, the MEM 316 provides information 320 relating blade root risk of failure for a number of power generating assets to expected costs. In further embodiments, the marginal effect maps 310 may be generated, e.g., via machine learning.

Thus, in an embodiment, as shown in FIGS. 5 and 7, the central optimizer module 306 receives the marginal effect maps 310 from the independent applications 304 and determines one or more operational setpoints 312 for each of the power generating assets 100 based on the marginal effect maps 310 to optimize an economic value of operating the plurality of power generating assets 100. Furthermore, as shown in FIGS. 5 and 7, the central optimizer module 306 communicates the operational setpoint(s) 312 to each of the power generating assets 100, e.g., wind turbines 202. More particularly, in an embodiment, the central optimizer module 306 is configured to communicate the operational setpoints 312 to each of the power generating assets for predefined time intervals, such as from about every one (1) minute to about ten (10) minutes.

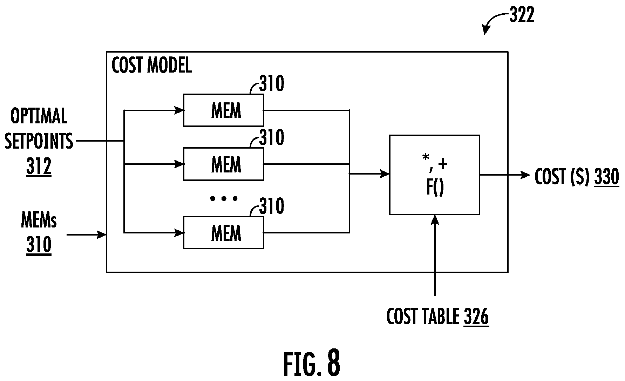

Referring particularly to FIGS. 7 and 8, further details of various components of the system 300 for operating a power generating plant having a plurality of power generator assets 100 according to the present disclosure are presented. In particular, as shown in FIG. 7, the central optimizer module 306 may include a cost model 322 and an optimizer software module 324. Further details of an embodiment of the cost model 322 are illustrated in FIG. 8. Thus, as shown in FIGS. 7 and 8, the cost model 322 may receive a cost table 326 that provides relationships of various costs associated with operating the power generating assets 100 at certain setpoint selections 328 to the information set forth in the plurality of the marginal effect maps 310. In certain embodiments, as an example, the costs may include electricity price, maintenance costs, repair costs, service agreement terms, discount rates, upcharge rates, or any other value associated with operation of the power generating assets, or combinations thereof. The cost model 322 can thus generate the costs 330 associated with such selections and provide the costs 330 to the optimizer software module 324. Thus, as shown, the cost model 322 and the optimizer software module 324 can analyze the costs 330 associated with operating the power generating assets 100 at the setpoint selections 328 to determine the optimal setpoints 312 for the power generating assets 100.

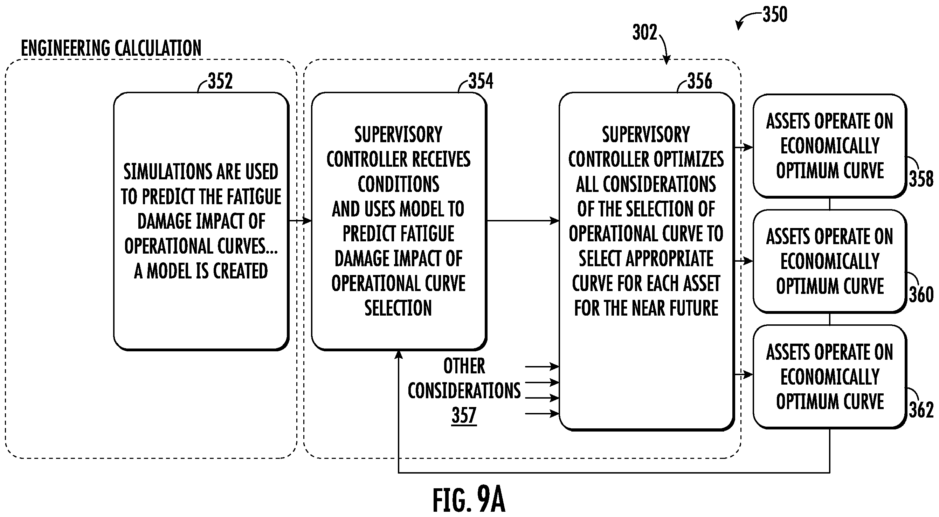

Referring now to FIGS. 9A-12, various embodiments of example independent applications 304 that may be used with the system 300 described herein are illustrated. In an embodiment, for example, the independent applications 304 may include a situational reliability application to predict the risk of an extreme and damaging load such as a blade bending load, an odometer-based control application, an odometer-based maintenance application, a fatigue life application, a gearbox component life application, a pitch bearing life application, a wake steering for loads application, a wake steering application for power production, a component failure risk assessment application, a thermal trip risk application, a vibration trip risk application, a power demand prediction application, a learning-based optimization application, a power production application, or any other suitable computer application. As used herein, the terms "application" and computer application" generally encompass their ordinary meanings, to include, for example, software programs designed to carry out one or more specific tasks.

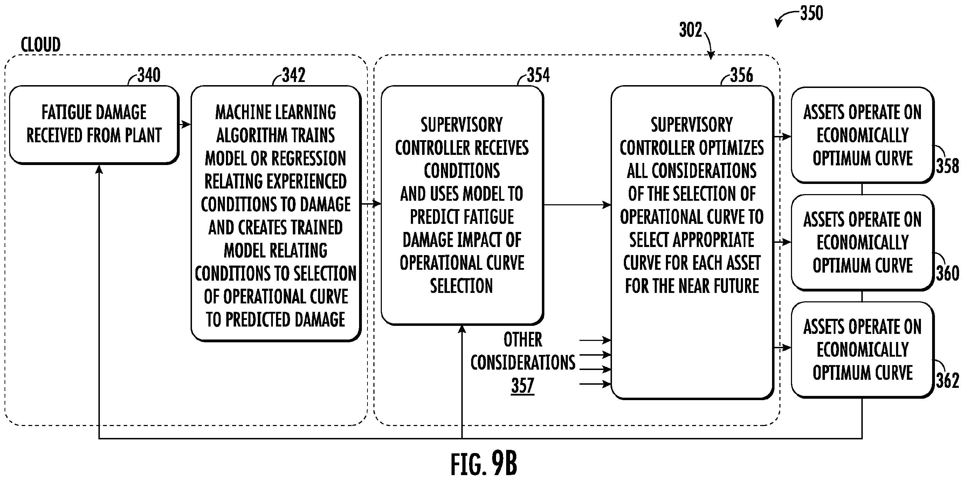

Referring particularly to FIGS. 9A and 9B, schematic diagrams of an embodiment of a fatigue life application 350 of the system 300 for operating a power generating plant according to the present disclosure are illustrated. In particular, as shown at 352 in FIG. 9A, in an embodiment, the fatigue life application 350 may generate one or more models based on engineering calculations. In such embodiments, the engineering calculations may be based on simulations to predict the fatigue damage impact of various operational curves or setpoints. In alternative embodiments, as shown at 340 and 342 of FIG. 9B, the fatigue life application 350 may generate one or more models using machine learning or regression. In particular, as shown at 340, the fatigue life application 350 is configured to receive fatigue damage from the plant. Further, as shown at 342, the fatigue life application is configured to use one or more machine learning algorithms to train one or more models or regression relating experienced conditions to damage and to create a trained model relating conditions to selections of operational curves to predicted damage. In an embodiment, a gearbox component damage application or pitch bearing damage application could be very similar to the fatigue life application.

Accordingly, as shown at 354 in each of FIGS. 9A and 9B, the supervisory controller 302 may thus receive the simulations and use the model(s) to predict fatigue damage impact of various operational curve selections. Moreover, as shown at 356, the supervisory controller 302 is configured to optimize all considerations of the selection of operational curves to select appropriate curves for each power generating asset in the near future. In addition, as shown at 357, the supervisory controller 302 may also include one or more additional considerations when optimizing the selections. Thus, as shown at 358, 360, and 362, the supervisory controller 302 is configured to send the selections the power generating assets 100 such that the individual power generating assets 100 each operate on economically optimum curves.

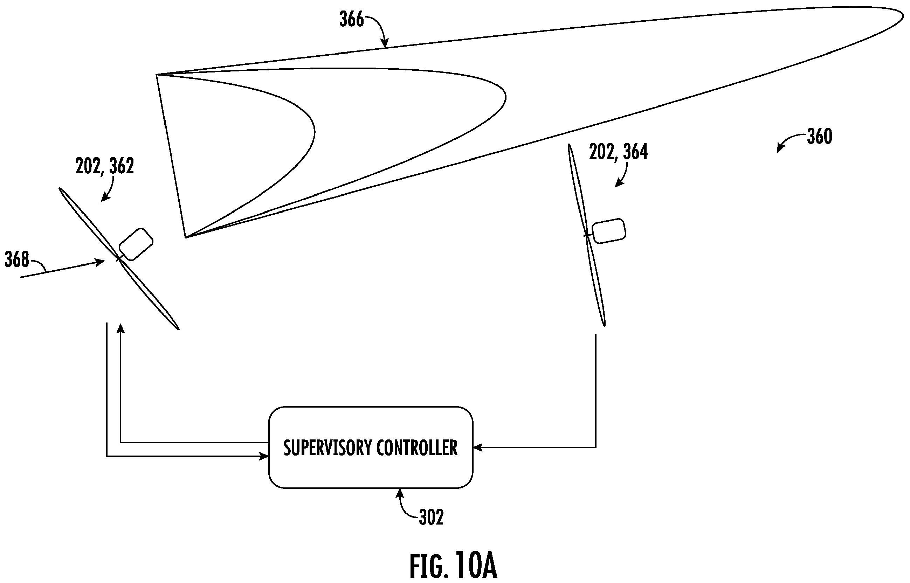

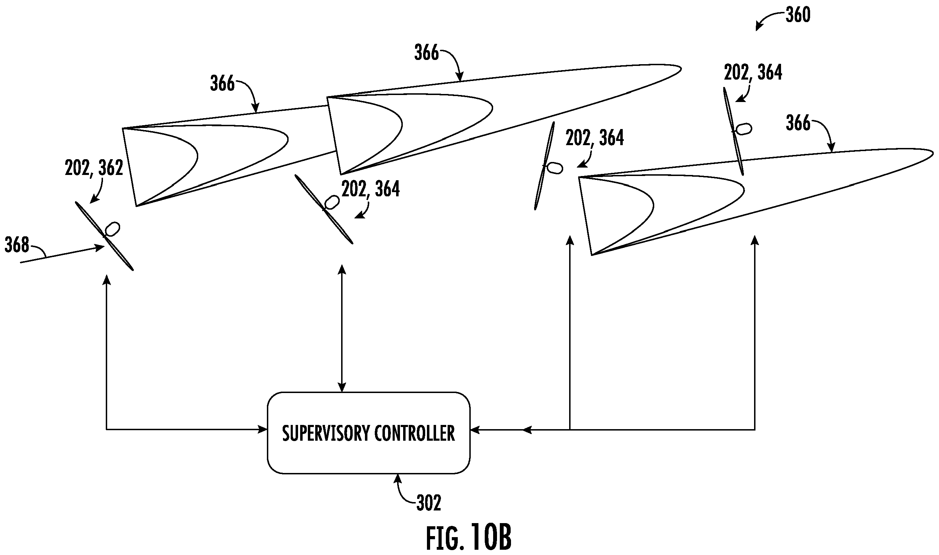

Referring now to FIGS. 10A and 10B, schematic diagrams of various embodiments of a wake steering for loads application 360 of the system 300 according to the present disclosure are illustrated. In particular, FIG. 10A illustrates a schematic diagram of the wake steering for loads application 360 in which the supervisory controller 302 receives load and power from all power generating assets 100 and recognizes high rotor imbalance loads with moderate power loss. Thus, the supervisory controller 302 is configured to detect partial wake such that an upstream power generating asset 362 can be steered (as indicated by arrow 368) to move a downstream power generating asset 364 out of a wake path 366, thereby reducing loads. In addition, in such embodiments, the supervisory controller 302 may include a machine learning algorithm configured to apply different combinations that can remember effects of the combinations and learn therefrom. Such results can be used as inputs to the machine learning algorithm, including e.g., ambient conditions.

Referring now to FIG. 10B, in another embodiment, the supervisory controller 302 of the wake steering for loads application 360 is configured to vary wake steering to break up the wakes 366. Furthermore, in an embodiment, the wake steering for loads application 360 is configured to utilize machine learning and optimization algorithms to learn patterns including ambient conditions. In such embodiments, the wake steering for loads application 360 can vary the wakes 366 such that every asset impacts every other asset. Moreover, the wake steering for loads application 360 may be integrated as an economic impact of risks. Further, the MEM 310 on one asset can include effects on neighboring assets.

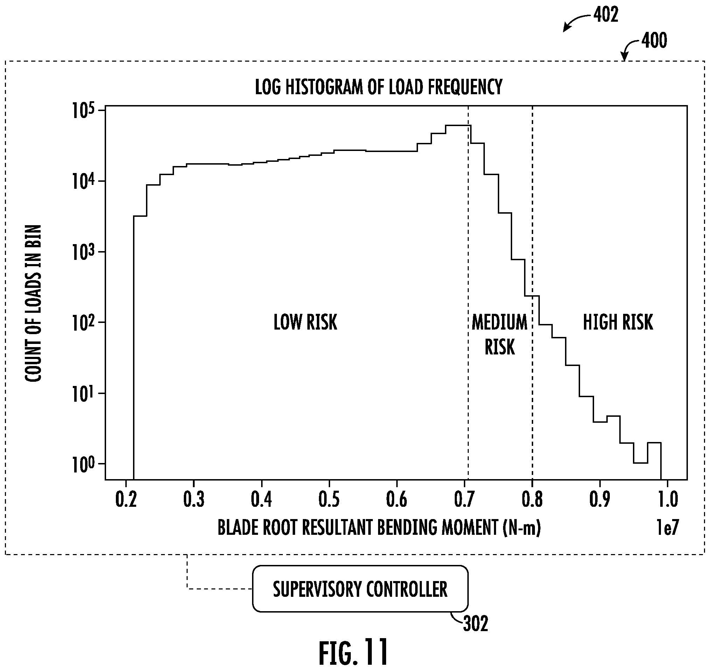

Referring now to FIG. 11, a schematic diagram of an embodiment of a graph 400 generated by a risk assessment application 402 of the system 300 for operating a power generating plant according to the present disclosure is illustrated. In particular, as shown, the risk assessment application 402 may be configured to generate an assessment of risk level (e.g., low risk, medium risk, or high risk) for a certain operating condition (e.g., wind, turbine state, farm state, etc.). Moreover, in an embodiment, the risk assessment application 402 may include one or more machine learning models. In such embodiments, the risk assessment application 402 is configured to employ the trained machine learning model(s) to classify the risk level of the current conditions and/or anticipated conditions over some time period (e.g., wind, turbine state, farm state, etc.). This risk level assessment can be combined with other information to estimate a risk of failure (i.e., the probability of occurrence of some component failure mode, such as blade fracture) for each operating setpoint of the turbine, under the current conditions. This other information may come from probabilistic models, first principles models, simulations and others. Information, such as risk of failure, can thus be transmitted to the central optimizer module 306 that can determine whether to uprate or derate the assets, e.g., over a certain future time frame, such as for the next ten (10) minutes.

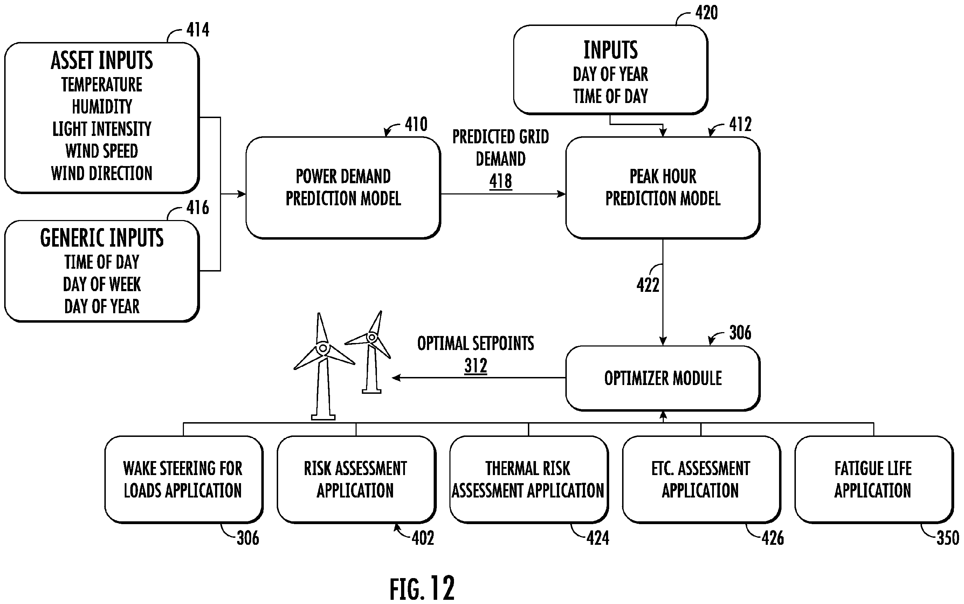

Referring now to FIG. 12, a schematic diagram of an embodiment of a power demand prediction application 410 and a peak hour prediction application 412 of the system 300 for operating a power generating plant according to the present disclosure is illustrated. In particular, as shown, the power demand prediction model 410 receives various inputs 414, 416 (e.g., asset and/or generic inputs) and generates a predicted grid demand 418. The predicted grid demand 418 is then used by the peak prediction model application 412, along with additional inputs 420, to generate an output 422, e.g., relating to a chance of the next hour being a peak hour for power demand. This output 422 can also be sent to the central optimizer module 306 to generate the optimal setpoints described herein.

In certain embodiments, as shown the central optimizer module 306 is configured to receive inputs from a plurality of the independent applications described herein, including but not limited to the wake steering for loads application 360, the risk assessment application 402, the fatigue life application 350, a thermal risk application 424, or any other suitable application 426 (such as a situational reliability application, an odometer-based control application, an odometer-based maintenance application, a learning-based optimization application, or similar).

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Further aspects of the invention are provided by the subject matter of the following clauses:
A method for operating a power generating plant having one or more power generating assets, the method comprising: receiving, via a plurality of independent applications of a supervisory controller, a plurality of operational parameters relating to the one or more power generating assets in the power generating plant; generating, via the plurality of independent applications of the supervisory controller, a plurality of marginal effect maps based on the plurality of operational parameters, each of the plurality of the marginal effect maps comprising a model of information relating operational setpoint selections of the one or more power generating assets to expected value or an effect on a component and failure mode; receiving, via a central optimizer module of the supervisory controller, the plurality of marginal effect maps from the plurality of independent applications; determining, via the central optimizer module of the supervisory controller, one or more operational setpoints for the one or more power generating assets in the power generating plant based on the plurality of marginal effect maps to optimize an economic value of operating the one or more power generating assets; and communicating, via the central optimizer module of the supervisory controller, the one or more operational setpoints to the one or more power generating assets in the power generating plant.

The method of any preceding clause, wherein the plurality of operational parameters comprises at least one of environmental data, geographical data, forecasted data, seasonal data, historical data, loading data, power data, one or more grid parameters, one or more sensor measurements, or one or more electrical conditions.

The method of any preceding clause, wherein the plurality of independent applications comprises at least one of a blade bending load, an odometer-based control application, an odometer-based maintenance application, a fatigue life application, a gearbox component life application, a pitch bearing life application, a wake steering for loads application, a wake steering application for power production, a component failure risk assessment application, a thermal trip risk application, a vibration trip risk application, a power demand prediction application, a learning-based optimization application, and a power production application.

The method of any preceding clause, further comprising generating, via the plurality of independent applications of the supervisory controller, the plurality of marginal effect maps based on the plurality of operational parameters using machine learning.

The method of any preceding clause, wherein the central optimizer module of the supervisory controller utilizes a cost model.

The method of any preceding clause, wherein the cost model comprises a cost table relating a plurality of costs to the information set forth in the plurality of the marginal effect maps, the plurality of costs comprising at least one of electricity price, maintenance costs, repair costs, service agreement terms, discount rates, upcharge rates, or combinations thereof.

The method of any preceding clause, wherein the component and the failure mode further comprise at least one of a risk of failure, damage, power production, or compliance.

The method of any preceding clause, further comprising communicating the one or more operational setpoints to the one or more power generating assets in the power generating plant continuously for predefined time intervals.

The method of any preceding clause, wherein the predefined time intervals range from about one (1) minute to about ten (10) minutes.

The method of any preceding clause, wherein the power generating asset comprises at least one of a wind turbine, a solar power generating asset, a hydroelectric asset, and a hybrid power generating asset.

A system for operating a power generating plant, the system comprising: one or more power generating assets; a supervisory controller communicatively coupled to local controllers of one or more power generating assets, the supervisory controller comprising a plurality of independent applications and a central optimizer module, the plurality of independent applications and the central optimizer module configured to perform a plurality of operations, the plurality of operations comprising: receiving, via the plurality of independent applications, a plurality of operational parameters relating to the one or more power generating assets in the power generating plant; generating, via the plurality of independent applications, a plurality of marginal effect maps based on the plurality of operational parameters, each of the plurality of the marginal effect maps comprising a model of information relating operational setpoint selections of the one or more power generating assets to expected value or an effect on a component and failure mode; receiving, via the central optimizer module, the plurality of marginal effect maps from the plurality of independent applications; determining, via the central optimizer module, one or more operational setpoints for the one or more power generating assets in the power generating plant based on the plurality of marginal effect maps to optimize an economic value of operating the one or more power generating assets; and communicating, via the central optimizer module of the supervisory controller, the one or more operational setpoints to the one or more power generating assets in the power generating plant.

The system of any preceding clause, wherein the plurality of operational parameters comprises at least one of environmental data, geographical data, forecasted data, seasonal data, historical data, loading data, power data, one or more grid parameters, one or more sensor measurements, or one or more electrical conditions.

The system of any preceding clause, wherein the plurality of independent applications comprises at least one of a blade bending load, an odometer-based control application, an odometer-based maintenance application, a fatigue life application, a gearbox component life application, a pitch bearing life application, a wake steering for loads application, a wake steering application for power production, a component failure risk assessment application, a thermal trip risk application, a vibration trip risk application, a power demand prediction application, a learning-based optimization application, a power production application.

The system of any preceding clause, further comprising generating, via the plurality of independent applications of the supervisory controller, the plurality of marginal effect maps based on the plurality of operational parameters using machine learning.

The system of any preceding clause, wherein the central optimizer module of the supervisory controller comprises a cost model.

The system of any preceding clause, wherein the cost model comprises a cost table relating a plurality of costs to the information set forth in the plurality of the marginal effect maps, the plurality of costs comprising at least one of electricity price, maintenance costs, repair costs, service agreement terms, discount rates, upcharge rates, or combinations thereof.

The system of any preceding clause, wherein the component and the failure mode further comprise at least one of a risk of failure, damage, power production, or compliance.

The system of any preceding clause, further comprising communicating the one or more operational setpoints to the one or more power generating assets in the power generating plant continuously for predefined time intervals.

The system of any preceding clause, wherein the predefined time intervals range from about one (1) minute to about ten (10) minutes.

The system of any preceding clause, wherein the power generating asset comprises at least one of a wind turbine, a solar power generating asset, a hydroelectric asset, and a hybrid power generating asset.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for operating a power generating plant having one or more power generating assets, the method comprising:
receiving, via a plurality of independent applications of a supervisory controller, a plurality of operational parameters relating to the one or more power generating assets in the power generating plant;
generating, via the plurality of independent applications of the supervisory controller, a plurality of marginal effect maps based on the plurality of operational parameters, each of the plurality of the marginal effect maps comprising a model of information relating operational setpoint selections of the one or more power generating assets to expected value or an effect on a component and failure mode;
receiving, via a central optimizer module of the supervisory controller, the plurality of marginal effect maps from the plurality of independent applications;
determining, via the central optimizer module of the supervisory controller, one or more operational setpoints for the one or more power generating assets in the power generating plant based on the plurality of marginal effect maps to optimize an economic value of operating the one or more power generating assets; and
communicating, via the central optimizer module of the supervisory controller, the one or more operational setpoints to the one or more power generating assets in the power generating plant.

2. The method of claim 1, wherein the plurality of operational parameters comprises at least one of environmental data, geographical data, forecasted data, seasonal data, historical data, loading data, power data, one or more grid parameters, one or more sensor measurements, or one or more electrical conditions.

3. The method of claims 1-2, wherein the plurality of independent applications comprises at least one of a blade bending load, an odometer-based control application, an odometer-based maintenance application, a fatigue life application, a gearbox component life application, a pitch bearing life application, a wake steering for loads application, a wake steering application for power production, a component failure risk assessment application, a thermal trip risk application, a vibration trip risk application, a power demand prediction application, a learning-based optimization application, and a power production application.

4. The method of any preceding claim, further comprising generating, via the plurality of independent applications of the supervisory controller, the plurality of marginal effect maps based on the plurality of operational parameters using machine learning.

5. The method of any preceding claim, wherein the central optimizer module of the supervisory controller utilizes a cost model.

6. The method of claim 5, wherein the cost model comprises a cost table relating a plurality of costs to the information set forth in the plurality of the marginal effect maps, the plurality of costs comprising at least one of electricity price, maintenance costs, repair costs, service agreement terms, discount rates, upcharge rates, or combinations thereof.

7. The method of any preceding claim, wherein the component and the failure mode further comprise at least one of a risk of failure, damage, power production, or compliance.

8. The method of any preceding claim, further comprising communicating the one or more operational setpoints to the one or more power generating assets in the power generating plant continuously for predefined time intervals.

9. The method of claim 8, wherein the predefined time intervals range from about one (1) minute to about ten (10) minutes.

10. The method of any preceding claim, wherein the power generating asset comprises at least one of a wind turbine, a solar power generating asset, a hydroelectric asset, and a hybrid power generating asset.

11. A system for operating a power generating plant, the system comprising:
one or more power generating assets;
a supervisory controller communicatively coupled to local controllers of one or more power generating assets, the supervisory controller comprising a plurality of independent applications and a central optimizer module, the plurality of independent applications and the central optimizer module configured to perform a plurality of operations, the plurality of operations comprising:
receiving, via the plurality of independent applications, a plurality of operational parameters relating to the one or more power generating assets in the power generating plant;
generating, via the plurality of independent applications, a plurality of marginal effect maps based on the plurality of operational parameters, each of the plurality of the marginal effect maps comprising a model of information relating operational setpoint selections of the one or more power generating assets to expected value or an effect on a component and failure mode;
receiving, via the central optimizer module, the plurality of marginal effect maps from the plurality of independent applications;
determining, via the central optimizer module, one or more operational setpoints for the one or more power generating assets in the power generating plant based on the plurality of marginal effect maps to optimize an economic value of operating the one or more power generating assets; and
communicating, via the central optimizer module of the supervisory controller, the one or more operational setpoints to the one or more power generating assets in the power generating plant.

12. The system of claim 11, wherein the plurality of operational parameters comprises at least one of environmental data, geographical data, forecasted data, seasonal data, historical data, loading data, power data, one or more grid parameters, one or more sensor measurements, or one or more electrical conditions.

13. The system of claims 11-12, wherein the plurality of independent applications comprises at least one of a blade bending load, an odometer-based control application, an odometer-based maintenance application, a fatigue life application, a gearbox component life application, a pitch bearing life application, a wake steering for loads application, a wake steering application for power production, a component failure risk assessment application, a thermal trip risk application, a vibration trip risk application, a power demand prediction application, a learning-based optimization application, a power production application.

14. The system of claims 11-13, further comprising generating, via the plurality of independent applications of the supervisory controller, the plurality of marginal effect maps based on the plurality of operational parameters using machine learning.

15. The system of claims 11-14, wherein the central optimizer module of the supervisory controller comprises a cost model, and wherein the cost model comprises a cost table relating a plurality of costs to the information set forth in the plurality of the marginal effect maps, the plurality of costs comprising at least one of electricity price, maintenance costs, repair costs, service agreement terms, discount rates, upcharge rates, or combinations thereof.
